(19) **Europäisches Patentamt / European Patent Office / Office européen des brevets**

(11) **EP 3 179 265 A1**

(12) **EUROPÄISCHE PATENTANMELDUNG**

(43) Veröffentlichungstag:
14.06.2017 Patentblatt 2017/24

(51) Int Cl.:
*G01S 5/02* (2010.01) *G01S 13/56* (2006.01)
*G08B 13/24* (2006.01)

(21) Anmeldenummer: **16020481.4**

(22) Anmeldetag: **06.12.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **07.12.2015 DE 102015121230**

(71) Anmelder: **Deutsche Telekom AG**
**53113 Bonn (DE)**

(72) Erfinder: **Benner, Alexander**
**57627 Gehlert (DE)**

(74) Vertreter: **Raible Deissler Lehmann Patentanwälte PartG mbB**
**Senefelderstrasse 26**
**70176 Stuttgart (DE)**

(54) **VERFAHREN UND SYSTEM ZUM DETEKTIEREN VON BEWEGUNGEN VON OBJEKTEN**

(57) Die Erfindung betrifft ein Verfahren zum Detektieren einer Bewegung mindestens eines Objekts (20) in einem lokalen Funknetz (10), bei dem zeitliche Änderungen einer Feldstärke eines mindestens einer Zugangseinheit (11) des lokalen Funknetzes (10) zuzuordnenden Funkfeldes überwacht, aufgenommen, analysiert und ausgewertet werden, wobei gezielt mindestens ein passives Bauelement (13) im Bereich des lokalen Funknetzes derart installiert wird, dass die Feldstärke des Funkfeldes bei einer Bewegung des Objekts (20) vor das mindestens eine Bauelement (13) messbar beeinflusst wird, worüber die Bewegung des Objekts (20) detektiert wird. Ferner betrifft die vorliegende Erfindung ein entsprechendes System.

Figur 1

EP 3 179 265 A1

**Beschreibung**

**Technisches Gebiet**

Die vorliegende Erfindung betrifft ein Verfahren und ein entsprechendes System zum Detektieren einer Bewegung mindestens eines mobilen Objekts in einem lokalen Funknetz.

**Beschreibung des Standes der Technik**

Zum Detektieren von sich bewegenden Objekten in einem definierten Bereich, bspw. im Bereich eines Hauses oder einer Wohnung werden häufig Bewegungsmelder eingesetzt. Heutzutage verwendete Bewegungsmelder reagieren auf minimale Temperaturänderungen, wodurch sich ein in dem zu observierenden Bereich eindringendes Objekt bemerkbar macht. Alternativ dazu werden hierfür häufig auch Kameras eingesetzt, die Bewegungen auf Basis einer Änderung einer Bildinformation erkennen. Bewegungen von Objekten, insbesondere von Menschen, werden somit in aller Regel durch zusätzlich vor Ort angebrachte technische Komponenten erkannt. Aus Meldungen eines Bewegungsmelders Rückschlüsse auf eine An- oder Abwesenheit einer Person ziehen zu können, ist in aller Regel jedoch aber nicht möglich.

Aus der WO 2014/067586 ist ein Verfahren bekannt, bei welchem ein Bereich überwacht wird, indem Signalstärken eines Datensignals, das von einer ersten Vorrichtung zu einer zweiten Vorrichtung über eine drahtlose Verbindung innerhalb des Bereichs übertragen wird, gemessen werden. Dabei werden die Signalstärken durch Bildung von zwei ersten konsekutiven Gruppen von N konsekutiven Signalstärken und Berechnen erster Standardabweichungen für jede der konsekutiven ersten Gruppen, durch Bilden konsekutiver zweiter Gruppen von N konsekutiven ersten Standartabweichungen, so dass zwei unmittelbar aufeinanderfolgende zweite Gruppen sich durch eine erste Standardabweichung unterscheiden, und durch Berechnen zweiter Standardabweichungen für jede der konsekutiven zweiten Gruppen verarbeitet. Basierend auf den zweiten Standardabweichungen wird ermittelt, ob ein Eindringen eines Objekts in den zu überwachenden Bereich stattgefunden hat.

Demnach war es eine Aufgabe der vorliegenden Erfindung, eine Möglichkeit vorzusehen, ohne Einsatz weiterer technischer Komponenten, wie bspw. eines Bewegungsmelders oder einer Kamera, eine Bewegung eines Objekts in einem definierten Bereich detektieren zu können.

Zur Lösung dieser Aufgabe schlägt die vorliegende Erfindung ein Verfahren und ein System mit den Merkmalen der unabhängigen Patentansprüche vor. Ausgestaltungen der Erfindung gehen aus den jeweiligen abhängigen Patentansprüchen und der Beschreibung hervor.

Erfindungsgemäß wird ein Verfahren zum Detektieren von Bewegungen mindestens eines Objekts in einem lokalen Funknetz vorgeschlagen, bei dem zeitliche Änderungen einer Feldstärke eines mindestens einer Zugangseinheit des lokalen Funknetzes zuzuordnenden Funkfeldes überwacht, aufgenommen, analysiert und ausgewertet werden, wobei gezielt mindestens ein passives Bauelement derart im Bereich des lokalen Funknetzes installiert wird, dass die Feldstärke des mindestens einen Funkfeldes bei einer Bewegung des Objekts vor das mindestens eine Bauelement signifikant, d. h. messbar beeinflusst wird, worüber die Bewegung des Objekts und damit dessen Anwesenheit detektiert wird.

Eine Bewegung eines Objekts "vor" das mindestens eine passive Bauelement bedeutet im Rahmen der vorliegenden Offenbarung, dass sich das Objekt zwischen Bauelement und einer sendenden und/oder empfangenden Einheit, wie bspw. zwischen Bauelement und der mindestens einen Zugangseinheit, befindet, so dass das Bauelement gegenüber dem die sendende und empfangende Einheit umgebenden lokalen Funkfeld abgeschirmt wird und dadurch im Wesentlichen keinen Einfluss auf das Funkfeld nehmen kann.

Eine signifikante Beeinflussung der Feldstärke bedeutet hier eine charakteristische Änderung der Feldstärke, die sich bei Messung der Feldstärke deutlich zeigt.

Dabei wird vorzugsweise als passives Bauelement ein Dipol, der auf eine Frequenz des lokalen Funknetzes angepasst ist, gewählt. Dieser Dipol beeinflusst entweder direkt oder indirekt das lokal vorhandene Funkfeld mittels Reflektion oder Absorption der Funkwellen.

In weiterer Ausgestaltung werden zeitliche Änderungen einer Feldstärke einer Funkverbindung von mindestens einem in dem lokalen Funknetz angemeldeten Endgerät zu der mindestens einen Zugangseinheit des lokalen Funknetzes überwacht, aufgenommen, analysiert und ausgewertet.

Dabei ist es denkbar, dass das mindestens eine in dem lokalen Funknetz angemeldete Endgerät ein mobiles und/oder ein stationäres Endgerät ist und im Falle, dass das lokale Funknetz ein WLAN ist, dabei insbesondere ausgewählt wird aus der Gruppe bestehend aus: WLAN-Radio, WLAN-Receiver, ein mit einem WLAN-Modul ausgestattetes Gerät. Ferner kann es auch ein stationär aufgestelltes Gerät sein, das mit einem WLAN-Modul ausgestattet ist. Dies kann bspw. eine Waschmaschine sein.

In weiterer möglicher Ausgestaltung werden bei der Aufnahme der zeitlichen Änderungen der Feldstärke vor der Auswertung derselben externe Umfeldeinflüsse, insbesondere Störquellen in Form mindestens eines Funkwellen aussendenden Geräts und/oder mindestens eines anderen Funknetzes rausgerechnet.

Funkspektren werden generell in sogenannte Kanäle unterteilt. Dies gilt auch beim Funkspektrum für z. B. WLAN. Bei WLAN-Verbindungen in Europa haben diese Kanäle eine Kanalbreite von 20 bis 40 MHz (im Frequenzbereich 2,4 GHz) und zwischen 20 und 160 MHz (im Frequenzbereich 5 GHz). Wenn sich nun die Empfangsstärke (Feldstärke) eines Funkfeldes verändert (im Regelfall verringert), dann kann dies daran liegen, dass sich eine Person im Funkfeld befindet bzw. bewegt, oder auch daran, dass ein WLAN in der Umgebung im gleichen Kanal zu senden begonnen hat, in dem auch das erfindungsgemäße Verfahren bzw. die Zugangseinheit zur Zeit arbeitet, d. h. in dem das lokale Funknetz, welches mit dem erfindungsgemäßen Verfahren im Hinblick auf Bewegungen von Objekten überwacht werden soll, derzeit Signale sendet/empfängt. Somit steht zuerst einmal nicht fest, ob eine Bewegung/Anwesenheit detektiert werden kann.

Erfindungsgemäß wird dies dadurch gelöst, dass das Verfahren Störquellen erkennen kann, indem stetig nach neuen Funkfeldern gesucht wird, die dem Verfahren noch nicht bekannt sind. Bei einem neuen WLAN, das jetzt auf dem gleichen Kanal sendet wie das Verfahren arbeitet, ist die Detektion der Störquelle sehr leicht möglich, da sich WLANs im Regelfall mit ihrer SSID ausweisen. Wenn ein neues WLAN, d. h. ein Funkfeld mit einer neuen SSID, im gleichen Kanal arbeitet, kann dies durch dessen SSID erkannt werden. Auf Basis von dem Verfahren bekannten Wertetabellen kann eine Beeinflussung des anderen WLAN herausgerechnet werden. Dies geschieht so, dass die Empfangsstärke (Feldstärke) des neuen WLAN und die Empfangsstärke des erfindungsgemäßen Verfahrens bzw. der Zugangseinheit bzw. des zu überwachenden lokalen Funknetzes vor der Detektion des neuen WLANs als Eingangsgrößen für die Wertetabelle verwendet werden. Mit diesen Werten kann ein Korrekturfaktor ermittelt werden, mit dem die gemessenen Werte zur Bestimmung einer Detektion angepasst werden. Die Wertetabelle wird mit Messwerten gefüllt, die sich durch Überlagerung von Funkfeld A (Funkfeld der Zugangseinheit) mit einem anderen Funkfeld B (bspw. neues WLAN) ergeben, z. B. empirisch gemessen oder rechnerisch ermittelt bzw. unterstellt. Die Wertetabellen können auch noch deutlich komplexer gestaltet sein, wenn sich mehrere Funkfelder mit unterschiedlicher Feldstärke bezogen auf einen Kanal überlagern. Wenn eine Störung z. B. von einer Mikrowelle verursacht wird, so ist diese so charakteristisch, dass dies dem Verfahren ebenfalls bekannt ist und durch Vergleich des Empfangsmusters des neuen Funkfeldes mit den hinterlegten Charakteristika ebenfalls ermittelbar ist.

Wenn eine Störung dauerhaft vorhanden ist, z. B. länger als 12 Stunden, da ein neues WLAN eines Nachbarn z. B. dauerhaft auf dem neuen Kanal sendet, so wird die davon ausgehende Beeinträchtigung des vom erfindungsgemäßen Verfahrens bzw. von der Zugangseinheit verwendeten Kanals als neuer Grundzustand für das Verfahren verwendet. In diesem Fall empfiehlt es sich jedoch, dass im Verfahren eine neue Lernsequenz durchgeführt wird. Dies kann voll- oder teilautomatisiert geschehen. Vollautomatisiert, wenn dem Verfahren bekannt ist, dass sich keine Person mehr im zu überwachenden Bereich befindet und teilautomatisiert z. B. dadurch, dass dem Nutzer gemeldet wird, dass eine neue Lernsequenz zur Verbesserung der Detektion durchgeführt werden sollte.

Als lokales Funknetz kann ein Heimnetz, insbesondere ein WLAN verwendet werden.

In weiterer Ausgestaltung wird die mindestens eine Zugangseinheit durch einen WLAN-Router realisiert.

Als lokales Funknetz wird alternativ zu einem WLAN, in weiterer Ausgestaltung ein WiMAX (Worldwide Interoperability of Microwave Access) oder ein WPAN (Wireless Personal Area Network) verwendet.

In weiterer Ausgestaltung wird aus den zeitlichen Änderungen der Feldstärke ein temporäres Feldstärkenmuster des Funkfeldes abgeleitet und in einer Speichereinheit abrufbar hinterlegt. Es ist auch denkbar, dass räumliche Änderungen der Feldstärke des Funkfeldes bestimmt werden und daraus ein räumliches Feldstärkenmuster des Funkfeldes abgeleitet wird.

Ferner werden Änderungen der Feldstärke des Funkfeldes für definierte, im Bereich des lokalen Funknetzes liegende Wege aufgenommen, in der Speichereinheit abgelegt und als Vergleichsgrundlage für zukünftige Standortbestimmungen des zu detektierenden Objekts verwendet.

Gleichzeitig werden jeweilige Änderungen einer Feldstärke eines jeweiligen Funkfeldes mehrerer Zugangseinheiten des lokalen Funknetzes bestimmt, analysiert und ausgewertet. Aus einer Zusammenschau der daraus erstellten entsprechend mehreren Feldstärkenmuster der jeweiligen Funkfelder und einer jeweiligen Beeinflussung derselben durch die Anwesenheit des Objekts wird eine aktuelle Standortbestimmung des Objekts vorgenommen.

In möglicher Ausgestaltung wird das abgeleitete Feldstärkenmuster bzw. werden die abgeleiteten Feldstärkenmuster auf einer Anzeigeeinheit visualisiert dargestellt.

In weiterer Ausgestaltung wird mit Hilfe der abgeleiteten Feldstärkenmuster der jeweiligen Zugangseinheiten ein aktueller Standort des Objekts auf einem hinterlegten Lageplan von den dem lokalen Funknetz zuzuordnenden Zugangseinheiten angezeigt.

Im Falle, dass bei der Auswertung der Feldstärke festgestellt wird, dass sich das Objekt im Bereich des lokalen Funknetzes befindet, wird eine Warnnachricht, insbesondere in Form einer email an einen oder mehrere Nutzer ausgegeben.

Ferner betrifft die vorliegenden Erfindung ein System zum Detektieren von Bewegungen mindestens eines Objekts in einem lokalen Funknetz, mit einer Aufnahmeeinheit, die dazu konfiguriert ist, Änderungen, insbesondere zeitliche Änderungen einer Feldstärke eines mindestens einer Zugangseinheit des lokalen Funknetzes zuzuordnenden Funkfeldes aufzunehmen, einer Auswerteeinheit, die mit der Aufnahmeeinheit in kommunikativer Verbindung steht und dazu konfiguriert ist, die von der Aufnahmeeinheit ermittelten zeitlichen Änderungen der Feldstärke zu analysieren und auszuwerten, und mindestens einem passiven Bauelement, das dazu konfiguriert ist, bei gezielter Installation im Bereich des lokalen Funknetzes, die Feldstärke des Funkfeldes messbar zu beeinflussen, wobei das mindestens eine passive Bauelement im Bereich des Funkfeldes derart zu installieren ist, dass die Feldstärke des Funkfeldes bei einer Anwesenheit, insbesondere einer Bewegung des Objekts vor das mindestens eine Bauelement signifikant, d. h. messbar beeinflusst wird.

Bei dem erfindungsgemäßen System sind vorzugsweise die Aufnahmeeinheit und die Auswerteeinheit in einer funktionalen Einheit, insbesondere in einer Zugangseinheit des lokalen Funknetzes zusammengefasst.

Es ist denkbar, dass das System eine Speichereinheit umfasst, die dazu ausgelegt ist, ein aus den Änderungen der Feldstärke abgeleitetes Feldstärkenmuster und/oder ein davon abgeleitetes Bewegungsmuster des Objekts abrufbar zu speichern.

In weiterer Ausgestaltung weist das erfindungsgemäße System ferner eine Anzeigeeinheit auf, die dazu konfiguriert ist, das abgeleitete Bewegungsmuster anzuzeigen bzw. visualisiert darzustellen.

Ferner betrifft die Erfindung ein Computerprogrammprodukt mit einem computerlesbaren Medium und einem auf dem computerlesbaren Medium gespeicherten Computerprogramm mit Programmcodemitteln, die dazu konfiguriert sind, bei Ablauf des Computerprogramms auf einer Recheneinheit, ein voranstehend beschriebenes Verfahren auszuführen.

Erfindungsgemäß wird mittels passiver Bauelemente allgemein eine Funkumgebung bzw. ein Funkfeld mindestens einer Zugangseinheit des lokalen Funknetzes ausgewertet. Dabei wird bspw. ein seitens der Zugangseinheit, im Falle eines WLAN-Netzes seitens des WLAN-Routers ausgegebenes Signal von dem WLAN-Router selbst wieder empfangen und ausgewertet, ggf. unterstützt mit einem Abtastsignal, das nur dazu da ist, dieses als "Echo" wieder zu messen und darauf basierend auf ein aktuelles Funkfeld, dass der Zugangseinheit bzw. dem WLAN-Router zuzuordnen ist, zu schließen. Dabei wird in der Regel die Feldstärke in dBm gemessen. Dies entspricht einer Funktion, über welche Router, insbesondere WLAN-Router standardmäßig verfügen. Das bedeutet, dass die Zugangseinheit und die Aufnahmeeinheit in Form des WLAN-Routers eine Einheit bilden. Der WLAN-Router als Funkstation mit mindestens einem Funkfeld genügt erfindungsgemäß, um eine Bewegung eines Objekts zu erkennen. Hierfür dient das mindestens eine passive Bauelement, das gezielt im Bereich des lokalen Funkfeldes, hier speziell des WLAN, lokalisiert ist. Bei einer Abschottung des mindestens einen passiven Bauelements durch eine Bewegung des Objekts, die das mindestens eine passive Bauelement gegenüber der Funkstation abschirmt bzw. abschottet, kommt es gegenüber einer fehlenden Abschottung zu signifikanten Änderungen der Feldstärke des Funkfeldes, die von dem WLAN-Router als Echo eines von dem WLAN-Router ausgesendeten Signals wieder empfangen wird. Da die Signifikanz der Änderung, in Abhängigkeit des vor Ort angebrachten Bauelements, dem System durch einen zuvor durchzuführenden Anlernprozess bekannt ist, kann anhand der erfassten Änderung der Feldstärke des lokalen Funkfeldes auf eine Bewegung eines Objekts an einem konkreten Ort geschlossen werden. Das passive Bauelement führt, je nach Bauart, zu einer Erhöhung oder einer Verminderung der durch den WLAN-Router bzw. allgemein der Aufnahmeeinheit empfangenen Feldstärke des Funkfeldes. Wird das Bauelement von einem Körper abgeschottet, so tritt der durch das Bauelement bewirkte Einfluss auf die Feldstärke des Funkfeldes entweder gar nicht oder nur stark vermindert ein.

Für den Fall, dass sich keine der dem jeweiligen Haushalt, d. h. der jeweiligen Wohnung und dem jeweiligen Haus zuzuordnenden Personen in dem lokalen Funknetz befindet, wird bei einer detektierten Anwesenheit, insbesondere einer detektierten Bewegung eines Objekts eine Alarmmeldung ausgegeben, mittels welcher eine jeweilige informierte Person, in der Regel eine dem Haushalt zuzuordnende Person und/oder die Polizei sofort reagieren kann.

Ferner ist es denkbar, dass bei dem erfindungsgemäßen Verfahren, wie bereits voranstehend erwähnt, ein Anlernprozess bzw. eine Lernfunktion integriert ist, die es ermöglicht, Bewegungen konkreten Lokalitäten, d. h. konkreten Stellen innerhalb des lokalen Funknetzes zuzuordnen. Durch einen Vergleich mit im Vorfeld ermittelten Bewegungsmustern bei Auswertung verschiedener Funkverbindungen im Kontext bekannter Personen kann hierauf basierend auch auf eine Anwesenheit einer konkreten Person eines jeweiligen Haushalts geschlossen werden.

Die vorzusehende Überwachungssoftware, d. h. die Monitoring-Software ist in der Regel erfindungsgemäß in einer jeweiligen Zugangseinheit des lokalen Funknetzes, im Falle eines WLAN in dem WLAN-Router installiert. Der Router überwacht bestehende Funkverbindungen bzw. bestehende Funkfelder im lokalen Funknetz, um daraus dann bei einer Abweichung eine Bewegung eines Objektes zu ermitteln. Dies kann dann in Form eines über den Router bereitgestellten Webportals zur Verfügung gestellt werden. Die zur Durchführung des erfindungsgemäßen Verfahrens notwendige Software wird in der Regel auf einer Zugangseinheit, d. h. in der Regel einem Router aufgebracht bzw. verwendet. Ein Backend entfällt hierbei. Im Falle vorhandener stationärer Geräte, die ggf. Funkverbindungen zu einer Zugangseinheit des lokalen Funknetzes unterhalten, werden die jeweiligen Funkverbindungen der vorhandenen stationären Geräte hinsichtlich ihrer jeweiligen Feldstärke ausgewertet. Teil des erfindungsgemäßen Verfahrens ist auch die ständige Erfassung der Funkumgebung, in Form der Erfassung und Auswertung der bestehenden Reflexionen der von mindestens einer Funkstelle, wie bspw. dem WLAN-Router ausgesendeten Funkwellen im lokalen Funknetz und deren Veränderung im zeitlichen Kontext.

Unter einem Funkfeld ist allgemein ein einer Zugangseinheit des lokalen Funknetzes zuzuordnendes Funkfeld zu verstehen. Dabei können Funkverbindungen zu anderen in dem lokalen Funknetz existierenden stationären Geräten bestehen, die hinsichtlich ihrer jeweiligen Feldstärke ausgewertet werden können. Bei Abwesenheit derartiger stationärer oder mobiler Geräte, die jeweilig eine Funkverbindung zu einer Zugangseinheit des lokalen Funknetzes unterhalten, kann auch das Funkfeld, das einer jeweiligen Zugangseinheit zuzuordnen ist, hinsichtlich seiner, in der Regel örtlich variierenden Feldstärke zeitlich überwacht werden, da die Zugangseinheit in der Regel fortlaufend selbst Signale (SSID: Service Set Identifier als Broadcast-Signal) aussendet, die in der Funkumgebung reflektiert werden und dadurch von der Zugangseinheit selbst wieder empfangen werden. Demnach kann auch dieses Funkfeld durch ein geeignetes installiertes Bauelement messbar beeinflusst werden, so dass ein sich in dem Funkfeld bewegendes Objekt, sobald es vor dem Bauelement zu liegen oder zu stehen kommt, die Feldstärke derart beeinflusst, dass diese sich messbar verändert und aufgrund dessen Rückschlüsse auf die Anwesenheit eines Objekts gemacht werden können. Das Bauelement ist derart ausgestaltet, dass es leicht messbar Einfluss auf das Funkfeld nimmt, d. h. z. B. die Feldstärke des jeweiligen Funkfeldes derart abschwächt, dass bei einer durch ein Objekt realisierten Abschirmung des Bauelements die Feldstärke entsprechend stark zunimmt, was mit Hilfe eines Sensors und/oder der Aufnahmeeinheit, wie bspw. der Zugangseinheit selbst, leicht nachweisbar ist. Aufgrund einer derartigen Abschwächung des Einflusses des Bauelements auf die Feldstärke des Funkfeldes, kann relativ schnell auf eine entsprechende Anwesenheit eines Objektes in unmittelbarer Nähe des Bauelementes geschlossen werden. Da in der Regel ein lokales Funknetz über mehr als nur eine Zugangseinheit verfügt, ist eine geeignete Lokalisierung mehrerer Bauelemente in einem jeweiligen Funkfeld einer jeweiligen Zugangseinheit sinnvoll, um ein Bewegungsmuster eines Objekts innerhalb des lokalen Funkfeldes zu detektieren, nämlich durch eine jeweilige zeitliche Änderung der Feldstärke des jeweiligen Funkfeldes einer der Zugangseinheiten aufgrund einer Bewegung des Objektes entlang der jeweils geeignet installierten Bauelemente.

Um eine Feldstärkenänderung zu detektieren, wird die Feldstärke in der Regel fortlaufend gemessen. Aufgrund der gemessenen Werte der Feldstärke eines jeweiligen Funkfeldes wird ein Mittelwert gebildet und dieser mit einem Referenzwert verglichen. Der Referenzwert ist dabei vorab eingestellt und entsprechend in einer Speichereinheit hinterlegt. Weicht der gebildete Mittelwert vom Referenzwert über einen vorab festgelegten Schwellwert, d. h. einen Abweichewert ab, wird eine Anwesenheit bzw. eine Bewegung eines Objekts detektiert. Die Anzahl der für den Mittelwert zu verwendenden Werte der Feldstärke eines jeweiligen Funkfeldes kann ebenfalls vorab festgelegt und hinterlegt werden. Die jeweilige Anzahl zuletzt gemessener Werte einer Feldstärke werden einem Filter zugeführt, der eine Mittelwertbildung ausführt. Wurde zuvor festgestellt bspw. mittels eines in der parallelen Anmeldung desselben Anmelders vorgestellten Verfahrens, dass alle einem jeweiligen Haushalt zugehörigen Personen den Haushalt verlassen haben, so lässt eine Detektion eines sich bewegenden Objekts innerhalb des lokalen Funknetzes auf einen unbefugten Zugang des Objekts, in der Regel einer Person schließen, was unmittelbar zu einer Alarmmeldung an zuvor definierte Nutzer führen kann. Auf die oben genannte parallele Anmeldung DE 10 2015 121 227.7 "Verfahren und System zum Detektieren von Bewegungsmustern von mobilen Endgeräten", die das gleiche Prioritätsdatum besitzt, wird hier vollumfänglich Bezug genommen.

Die Erfindung sieht demnach vor, dass ohne einen Einsatz weiterer technischer Komponenten, wie bspw. eines Bewegungsmelders oder einer Kamera, eine Bewegung und darüber eine An- oder Abwesenheit einer Person festgestellt werden kann, nämlich alleine auf Basis eines vor Ort bereits befindlichen lokalen Funknetzes. Ein für die Einrichtung des Betriebs des Funknetzes bereits verwendetes Gerät, wie bspw. im Falle eines WLAN ein WLAN-Router genügt zur Detektion.

Eine allgemeine Beeinflussung eines vor Ort befindlichen Funknetzes durch in ihm sich bewegende Personen reicht erfindungsgemäß für eine Detektion aus.

Das erfindungsgemäße Verfahren beruht auf einer Auswertung von Änderungen einer Funkumgebung bzw. eines Funkfeldes der Zugangseinheit des lokalen Funknetzes, wie bspw. der Feldstärke mindestens einer Funkverbindung in dem lokalen Funknetz in einem zeitlichen Kontext bezogen auf im Funknetz ferner sich befindenden Endgeräten oder solchen, die sich in diesem Funknetz anmelden möchten.

Das erfindungsgemäße Verfahren betrifft eine Erkennung von Bewegungen und einer An- und Abwesenheit von Personen auf Basis der durch ihre Anwesenheit, insbesondere jedoch durch ihre Bewegungen verursachten Änderungen von Feldstärken bei bestehenden Funkverbindungen in dem lokalen Funknetz, wobei das lokale Funknetz aus einer Funkstelle bzw. Funkstation, d. h. einer Zugangseinheit oder aus mehreren Funkstellen bestehen kann.

Unter einem direkten Funkfeld soll im Rahmen der vorliegenden Beschreibung der Bereich eines Funknetzes zu verstehen sein, in dem es bspw. bei Durchschreiten einer Person zu einer signifikanten Beeinträchtigung der bestehenden Funkverbindung kommt. Stark idealisiert ist dies eine direkte Linie, bspw. eine kurze bzw. kürzeste Verbindung zwischen einer entsprechenden Antenne bspw. eines mobilen Endgerätes und einer Antenne des Funknetzes, d. h. der mindestens einen Zugangseinheit, wie bspw. im Falle eines WLAN einer Antenne des WLAN-Routers.

Bei einer Analyse einer Änderung der Feldstärke einer Funkverbindung sollte immer die Umgebung mit einbezogen werden. Wenn sich an der Umgebung bzw. dem Umfeld des lokalen Funknetzes etwas ändert, dann muss dies bei der Auswertung der aufgenommenen Feldstärkenänderung berücksichtigt werden, sodass dies nicht irrtümlich zu der Detektion eines im Prinzip nicht vorhandenen Bewegungsmusters führt. Eine Störung kann bspw. durch das Einschalten eines schlecht abgeschirmten Mikrowellengeräts erfolgen, die dann auf einer Frequenz ein Störsignal, die bestehende Funkverbindungen überlagert, ausstrahlt.

Eine Störung kann auch durch ein benachbartes lokales Funknetz verursacht werden, wenn bspw. der WLAN-Router eines benachbarten WLAN mit einer höheren Sendeleistung betrieben wird. Neue lokale Funknetze in einem Umfeld sind in der Regel anhand ihrer jeweiligen SSID, insbesondere jedoch ihrer jeweiligen Mac-Adresse eindeutig erkennbar und müssen bei einer Berechnung eines Normalzustands, d. h. einem Niveau aller bestehenden Funkverbindungen, ohne dass eine Bewegung eines mobilen Endgeräts vor Ort stattgefunden oder eine zusätzliche Dämpfung im Funkfeld eingebracht wurde, berücksichtigt werden. Gleiches gilt für ein temporäres Einschalten eines schlecht abgeschirmten Mikrowellengeräts, das eine Störung einer Funkverbindung durch Aussenden einer für Mikrowellengeräte typischen Frequenz, wie bspw. 2,455 GHz erzeugt. Ein Mikrowellengerät wird als allgemeine Störquelle in Erscheinung treten, ohne dass für diese bspw. eine SSID oder Mac-Adresse feststellbar wäre.

Das erfindungsgemäße Verfahren wird dadurch ausgeführt, dass eine Funkumgebung bzw. ein Funkfeld, insbesondere bestehende Funkverbindungen in einem lokalen Funknetz sukzessive hinsichtlich einer Änderung der jeweiligen Feldstärke überwacht und in Abhängigkeit eines Grads und einer Zeitdauer der festgestellten Änderung analysiert werden. Bestehende Funkverbindungen zu stationären Geräten sind für solche Detektionen prädestiniert, da Änderungen im Funkfeld unter Herausrechnung externer Umwelteinflüsse mit einer sehr hohen Wahrscheinlichkeit durch Bewegungen von Personen im Funkfeld zu dem entsprechenden stationären Gerät verursacht sein können. Aber auch Funkverbindungen zu mobilen Geräten können ausgewertet werden, sofern zuvor vom System detektiert wurde, dass alle dem Haushalt zugehörigen Personen das Haus bzw. die Wohnung verlassen haben. Der menschliche Körper leitet Funkwellen deutlich schlechter als die Luft, was sich in Bezug auf ein bestehendes lokales Funknetz und darin bestehende Verbindungen zur Detektion einer Bewegung auswerten lässt. Je mehr Funkverbindungen und Funkstellen zur Verfügung stehen, umso genauer wird die Detektion einer Bewegung und eines Aufenthaltsortes einer Person. Über einen Mechanismus "Lernmodus" zum Anlernen definierter Feldstärkenänderungen im Bezug auf vordefinierte Bewegungen und eine Visualisierungsmöglichkeit, können eine Anwesenheit einer Person und deren ungefährer Aufenthaltsort ebenfalls bestimmt werden.

Damit konkrete Bewegungen einer Person besser erkannt und lokalisiert werden können, werden erfindungsgemäß in der Regel mehrere spezielle, idealerweise passive Bauelemente vor Ort angebracht, um das Funkfeld des lokalen Funknetzes bei einer Bewegung bzw. Anwesenheit eines Objekts vor diesen Elementen signifikant zu beeinflussen. So können die Bauelemente in der Nähe einer Haus- bzw. Wohnungstür so angebracht werden, dass eine Person, die durch die Tür kommt oder geht, das Funkfeld signifikant dadurch verändert, dass das Bauelement in Richtung der Funkstelle, wie bspw. in Richtung eines WLAN Routers verdeckt wird. Eine Dämpfung des menschlichen Körpers kommt hierbei zum Tragen und je nachdem, ob das Bauelement auf Resonanz oder Reflektion ausgelegt ist, ergibt sich eine dementsprechende Änderung im Funkfeld, die sich auswerten lässt. Das passive Bauelement kann bspw. in Form eines Dipols ausgebildet sein, der auf eine Frequenz des Funknetzes angepasst ist, und sich in Resonanz hierzu befindet, bspw. mit der Hälfte der Wellenlänge (Lamda-Halbe). Bei WLAN gibt es in Deutschland bspw. Frequenzbereiche von 2,4 und 5 GHz.

Eine Antenne hätte somit bei 2,4 GHz folgende Abmessungen:

Lichtgeschwindigkeit (229.792 km/s) / Wellenlänge (2400 MHz)

= 12,49 cm

→12,49cm x Verkürzungsfaktor 0,97 (da in Luft und nicht im Vakuum betrieben) ergibt eine Länge von 12,11 cm. Physikalisch ist es möglich, Resonanz auch durch einen geraden Teiler der zuvor ermittelten Länge zu erreichen, d. h. z. B. die ermittelte Länge wird geteilt durch 4.

12,49 cm / 4 = 3,12 cm

→3,12 cm x Verkürzungsfaktor 0,97 (da in Luft und nicht im Vakuum betrieben) ergibt eine Länge von 3,029 cm. Die Antenne könnte dann z. B. als ein oder mehrere Quadrate realisiert sein, deren Kantenlänge möglichst exakt der berechneten 3,029 cm oder einem geraden Teiler davon entspricht.

Für eine WLAN-Frequenz von 5GHz wird die Berechnung nachfolgend ebenfalls exemplarisch zur Bestimmung der Bauelemente durchgeführt.
Eine Antenne hätte somit bei 5GHz folgende Abmessungen:

Lichtgeschwindigkeit (229.792 km/s) / Wellenlänge (5000 MHz) = 5,99 cm →5,99 cm x Verkürzungsfaktor 0,97 (da in Luft und nicht im Vakuum betrieben) ergibt eine Länge von 5,81 cm.

Physikalisch ist es möglich, Resonanz auch durch einen geraden Teiler der zuvor ermittelten Länge zu erreichen, d. h. z. B. die ermittelte Länge wird geteilt durch 4.

$$5,99 \text{ cm} / 4 = 1,498 \text{ cm}$$

→1,498 cm x Verkürzungsfaktor 0,97 (da in Luft und nicht im Vakuum betrieben) ergibt eine Länge von 1,454 cm. Die Antenne könnte dann z. B. als ein oder mehrere Quadrate realisiert sein, deren Kantenlänge möglichst exakt der berechneten 1,454 cm oder einem geraden Teiler davon entspricht.

Eine technische Realisierung ist möglich, indem in dem lokalen Funknetz eine Intelligenz, die in der Regel in einer jeweiligen Zugangseinheit implementiert ist, geschaffen wird, die Änderungen der Feldstärke einer Funkumgebung, d. h. eines Funkfeldes, insbesondere einer Funkverbindung in einem zeitlichen Kontext bezogen auf die im lokalen Funknetz sich bereits befindenden Endgeräte oder solchen, die sich an ihm anmelden möchten, auswertet. Mittels einer Lernsequenz können Feldstärkenänderungen bestehender Funkverbindungen konkreten Bewegungen zugeordnet, d. h. gelernt werden. Darüber hinaus ergeben sich im Laufe eines Betriebes signifikante Feldstärkemuster bezogen auf die bestehenden Funkverbindungen, die zur Detektion von Abweichungen ebenfalls herangezogen werden können. Dabei ist zu beachten, dass die Zugangseinheit selbst ein Signal, bspw. seine SSID als Broadcast-Signal, aussendet und selbst wieder empfängt und daraus eine Empfangsfeldstärke, d. h. eine Feldstärke ihres lokalen Funkfeldes, ermitteln kann. Es entstehen Änderungen in der Feldstärke in Abhängigkeit einer Position, die ein Objekt im Funkfeld, insbesondere jedoch vor einem in dem Funkfeld gezielt lokalisierten passiven Bauelement, einnimmt.
Bei einem Router mit einem sogenannten Diversity-Empfang, was inzwischen zum Standard gehört, kann über eine Veränderung der Empfangsfeldstärke je dem Router zugeordneten Antennen auf Basis von im Anlernprozess ermittelter Werte für die Feldstärke eine Positionierung eines Objekts auch dann ermittelt werden, wenn sich vergleichsweise "gleich" auswirkende Bauelemente bspw. an einem linken und einem rechten Ende eines Raumes befinden, während sich der Router genau in der Raummitte befindet. Eine stärkere Veränderung der Empfangsfeldstärke bei der sich auf der linken Seite des Routers befindenden Antenne weist auf ein Objekt hin, das sich vor dem Bauelement links befindet, da die Entfernung von diesem Bauelement bis zur linken Antenne geringer ist als bis zur rechten Antenne.
Vorgenanntes ist oft bereits über eine Erweiterung einer bestehenden Firmware eines jeweiligen Routers (=Zugangseinheit) möglich, sofern eine Rechenleistung einer Hardware einen Ablauf der Analysefunktionen in einem zeitlich vertretbaren Rahmen ermöglicht. Wenn das lokale Funknetz aus mehreren Funkkomponenten besteht, d. h. aus mehreren Accesspoints, ist auch auf diesen die Firmware anzupassen. Zudem muss die jeweilige Firmware auf dem Hauptgerät, bspw. im Falle eines WLAN auf dem WLAN-Router, so erweitert werden, dass sie auch Informationen der anderen Komponenten im lokalen Funknetz, bspw. anderer Accesspoints erhalten und auswerten kann. Sollte es die Rechenleistung der Hardware nicht zulassen oder eine Erfassung und Analyse der Feldstärkewerte vor Ort nicht gewünscht sein, so kann dies auch an einer anderen Stelle z. B. in einer Cloud erfolgen, die sich ebenfalls im internen Netzwerk (z. B. NAS = Network Attached Storage) befindet oder aber über das Internet erreichbar ist.
Zur Realisierung des erfindungsgemäßen Verfahrens ist eine Modifikation an einer Firmware der jeweiligen Geräte notwendig, um Feldstärkenänderungen bei jeweiligen Funkverbindungen der sich im lokalen Funknetz befindlichen und per Funk angebundenen Geräte erfassen und auswerten zu können. Zu genaueren Identifikation von Bewegungen an sicherheitssensiblen Stellen, sollte die Firmware hier ebenfalls eine Lernsequenz beherrschen, die in Abhängigkeit einer Verwendung von Bauelementen vor Ort zur definierten Beeinflussung des Funknetzes idealerweise mindestens folgende Stadien erlernen können sollte:

a) Wohnung oder Haus sind leer und keine Personen oder Haustiere befinden sich in ihm.

b) Personen befinden sich in der Wohnung oder dem Haus und bewegen sich.

c) Personen befinden sich in der Wohnung oder dem Haus und bewegen sich nicht.

d) Wohnung oder Haus ist an den sensiblen Stellen mit speziellen Bauelementen ausgestattet, die das vorhandene Funkfeld signifikant beeinflussen und es befinden sich keine Personen oder Tiere darin.

e) Wohnung oder Haus ist an den sensiblen Stellen mit speziellen Bauelementen ausgestattet, die das vorhandene Funkfeld signifikant beeinflussen und es befinden sich Personen im Haus, die sich bewegen.

f) Wohnung oder Haus ist an den sensiblen Stellen mit speziellen Bauelementen ausgestattet, die das vorhandene Funkfeld signifikant beeinflussen und es befinden sich Personen im Haus, die sich nicht bewegen.

Die Lernsequenz dient insbesondere zur Ermittlung einer Größe von Abweichwerten, die für die Detektion eines konkreten Ereignisses im erfindungsgemäßen Verfahren Verwendung finden.

Die dabei verwendbaren Bauelemente, bspw. in Form von auf den Frequenzbereich des Funknetzes abgestimmten oder darüber angebunden Antennen, könnten z. B. in ein Klebeband oder einen Klebewinkel fortlaufend eingearbeitet sein, was in beliebigen Farben angeboten wird und bspw. mit einer Schere kürzbar und auch überstreichbar ist. So ist es denkbar, dass von einer Rolle entsprechende Längen abgeschnitten und bspw. am oder neben einem Rahmen einer Wohnungs- oder einer Haustür von Innen angebracht werden. Wenn keine Person sich davor befindet, ist das passive Bauelement als dedizierter Störer oder als Funksenke mit Sendeverlust im Funknetz feststellbar. Wenn sich jemand davor befindet, wird die Störung bzw. der Sendeverlust signifikant geringer, da ein Mensch deutlich schlechter Funkwellen leitet als die Luft und dadurch das Bauelement in seiner Beeinflussung des lokalen Funknetzes nicht mehr so wirksam ist.

Das erfindungsgemäß gezielt im Bereich des lokalen Funknetzes zu installierende Bauelement könnte auch ein aktives Bauelement sein. Denkbar ist auch ein Kompromiss zwischen einem passiven und einem aktiven Bauelement, in dem beispielsweise ein Speicher in Form bspw. eines Kondensators eine über eine in Resonanz betriebene Antenne empfangene Sendeleistung eines Senders, wie bspw. einer Antenne des WLAN-Routers, aufnimmt und solange speichert bis eine Ladungsmenge vorhanden ist, die es ermöglicht, über die gleiche Antenne, die in erster Linie dann nicht als Empfänger sondern kurzzeitig auch als Sender betrieben wird, oder über eine andere Antenne ein Funksignal auszusenden, dass im Funkfeld feststellbar und auswertbar ist. Diese Auswertung kann bspw. von einem WLAN-Router vorgenommen werden. Auch hierdurch ließe sich der Grad der Abweichung steigern, wenn eine Person sich im direkten Funkfeld zwischen Bauelement und Sender befindet oder die Position des Bauelements signifikant geändert wird. Je höher eine Abschottung bzw. Dämpfung des Bauelements oder dessen Wirksamkeit, desto geringer wird dessen Einfluss auf das lokale Funknetz, was sich auswerten lässt.

Wenn das Bauelement mit einem Speicher oder einer aktiven Spannungsversorgung so betrieben wird, dass über eine Antenne in zyklischen Abständen ein Funksignal zurück gesendet wird, kann dies eine einfache Kodierung enthalten, wie bspw. einen 8-stelligen binären Code, die dann vergleichbar mit einem Leuchtfeuer eines Leuchtturms einen Normalzustand darstellt. An mehreren Stellen angebrachte Bauelemente mit einer jeweilig unterschiedlichen Kodierung ermöglichen es, Bewegungen eines Objekts, insbesondere einer Person einer Lokalität konkret zuzuordnen, wenn eine Kodierung in einer definierten Zeit nicht mehr zurückgemeldet wird. Wird die Kodierung nicht mehr zurückgemeldet, d. h. nicht mehr empfangen, kann darauf geschlossen werden, dass sich ein Körper bzw. ein Objekt gerade vor dem Bauelement befindet und so den Empfang des Codes bzw. der Kodierung unmöglich macht. Das jeweilige passive Bauelement ist dabei so konzipiert, dass es regelmäßig einen vordefinierten bzw. der Aufnahmeeinheit, wie bspw. dem WLAN-Router, bekannten Code aussendet. Es ist auch möglich, die Bauelemente mittels unterschiedlichen Frequenzen anzusteuern, bspw. Frequenz 1, mit der sich das Bauelement in Resonanz befindet zum Laden des Speichers und Frequenz 2 zur Aussendung der Kodierung. Damit die Funkstelle, bspw. der WLAN-Router bezogen auf seine Hardware nicht so stark bis gar nicht angepasst werden muss, bietet es sich an, nur eine Frequenz noch zusätzlich über den Router empfangbar zu machen bzw. zu empfangen und zwar Frequenz 2. Frequenz 1 sollte identisch mit einer bereits genutzten WLAN-Frequenz sein. Zur Durchführung des erfindungsgemäßen Verfahrens genügt bereits eine Kommunikationseinrichtung, die ein Signal aussendet und mindestens ein passives Bauelement, dessen Position bekannt ist. Die Lokalität der Kommunikationseinrichtung muss dagegen nicht bekannt sein, sollte jedoch nach dem Anlernprozess nicht mehr verändert werden.

Weitere Vorteile und Ausgestaltungen der Erfindung ergeben sich aus der Beschreibung und den beiliegenden Zeichnungen. Es versteht sich, dass die voranstehend genannten und die nachstehend noch zu erläuternden Merkmale nicht nur in der jeweils angegebenen Kombination, sondern auch in anderen Kombination oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.

Figur 1 zeigt in schematischer Darstellung ein lokales Funknetz, in dem eine Ausführungsform des erfindungsgemäßen Verfahrens durchgeführt wird.

Figur 2 zeigt in tabellarischer Aufstellung, wie eine Überwachung einer Feldstärke einer Funkverbindung in einem lokalen Funknetz gemäß einer Ausführungsform des erfindungsgemäßen Verfahrens realisiert werden kann.

Figur 3 zeigt in tabellarischer Aufstellung, wie ein Referenzwert, wie er bei einer Überwachung einer Feldstärke einer Funkverbindung in einem lokalen Funknetz gemäß einer weiteren Ausführungsform verwendet wird, ermittelt werden kann.

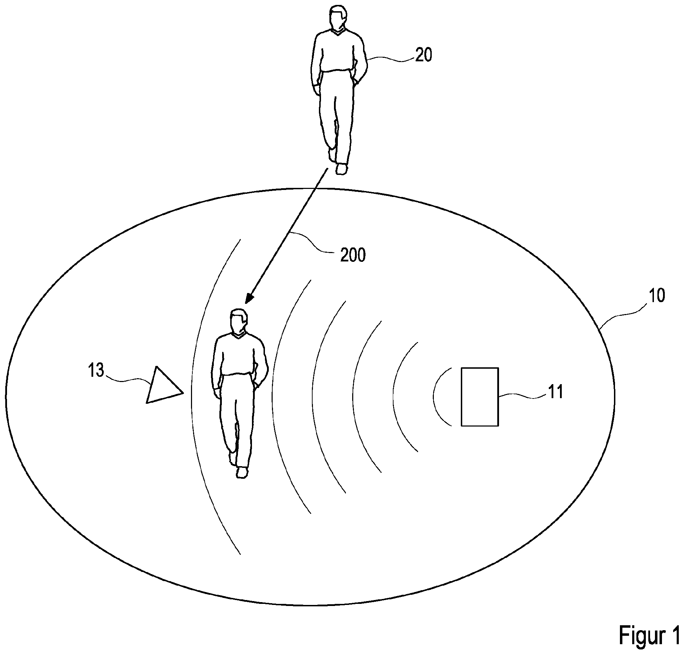

Figur 1 zeigt in schematischer Darstellung ein lokales Funknetz 10 mit einer Zugangseinheit 11. Im Falle eines WLAN handelt es sich bei der Zugangseinheit in der Regel um einen WLAN-Router. Die Zugangseinheit bzw. der WLAN-Router 11 sendet fortlaufend eigene Signale aus, die dann von dem WLAN-Router 11 selbst wieder durch Reflektion empfangen werden. Die Funkverbindung kann dabei in ihrer einfachsten Form nur aus der Zugangseinheit 11 bestehen, die das von ihr selbst über ihre Sendeantennen ausgesendete Signal (Funkfeld) fortwährend mittels ihrer Empfangsantennen hinsichtlich der Empfangsfeldstärke und Beeinflussung durch andere Funkverbindungen überwacht. Der WLAN-Router ist erfindungsgemäß dazu konfiguriert, diese wieder empfangenen Signale auszuwerten und darüber eine Feldstärke des Funkfeldes, das der Zugangseinheit 11 zuzuordnen ist, zu überwachen, zu analysieren und auszuwerten. Ferner umfasst das lokale Funknetz 10 ein Bauelement 13, das im Bereich des lokalen Funknetzes 10 installiert ist. Dabei ist das Bauelement 13 im Bereich des lokalen Funknetzes derart installiert, dass die Feldstärke des Funkfeldes im Bereich zwischen Bauelement 13 und Zugangseinheit 11 stark beeinflusst, z. B. stark abgeschwächt wird. "Stark" bedeutet hier, dass die Feldstärkenänderung aufgrund der Anwesenheit des Bauelements 13 deutlich messbar ist. Kommt nun ein Objekt, bspw. ein Mensch 20, von außerhalb des lokalen Funknetzes 10 in das lokale Funknetz 10, wie durch Pfeil 200 angedeutet, und bewegt sich der Mensch 20 vor das Bauelement 13 und somit in einen Bereich des Funkfeldes zwischen Bauelement 13 und Zugangseinheit 11, so wird aufgrund der Anwesenheit des Objekts 20 der Einfluss des Bauelements 13 auf das Funkfeld abgeschwächt, so dass die Feldstärke des Funkfeldes sich in diesem Bereich durch die Anwesenheit des Objekts 20 messbar verändert, z. B. erhöht. Dadurch kann durch die Zugangseinheit 11 erkannt werden, dass sich ein Objekt 20 in das lokale Funknetz 10, spezifisch in den Bereich zwischen Zugangseinheit 11 und Bauelement 13 bewegt hat, so dass hierüber eine Detektion des Objekts 20 ermöglicht wird. Bei dem Bauelement 13 handelt es sich hier um ein passives Bauelement. Dabei kann es sich insbesondere um einen Dipol handeln, der auf eine Frequenz des lokalen Funknetzes 10, vorwiegend die Sendefrequenz der Zugangseinheit 11, angepasst ist.

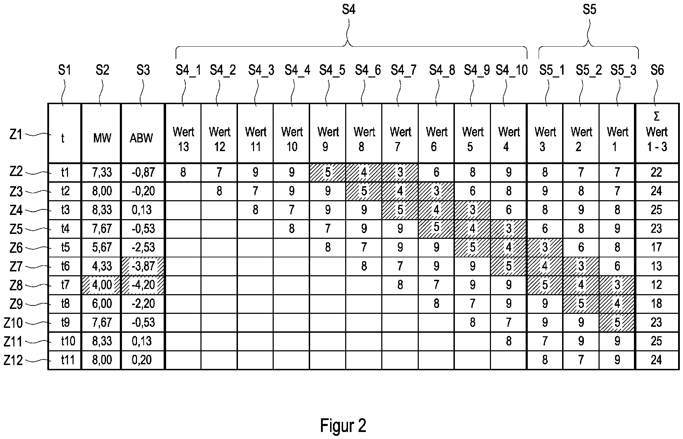

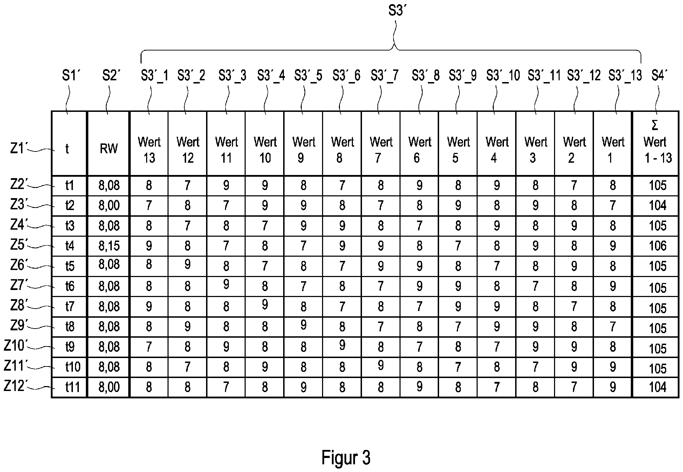

Figur 2 zeigt eine Tabelle mit sechs Spalten S1... S6 und zwölf Zeilen Z1...Z12. In der Tabelle soll aufgezeigt werden, wie eine erfindungsgemäß zu überwachende Feldstärke mindestens einer Funkverbindung aufgenommen, analysiert und letztlich ausgewertet werden kann. Die Messwerte (Wert 1 bis Wert 13) werden in chronologischer Reihenfolge und zeitlich gleichen Abständen erfasst und stehen der Auswerteeinheit, funktional beispielsweise vergleichbar mit einem Schieberegister, zeitlich nacheinander zur Verfügung. Letztlich ist es ein Ziel des erfindungsgemäßen Verfahrens, eine Bewegung eines Objekts in einem der Zugangseinheit zuzuordnenden Funkfeld mit Hilfe mindestens eines gezielt positionierten Bauelements zu detektieren. Dazu sind das Funkfeld und insbesondere darin existierende Funkverbindungen zu der Zugangseinheit zu analysieren, um eine aufgrund einer Bewegung des Objekts zeitliche Änderung einer oder mehrerer dieser Funkverbindungen feststellen und davon auf die Bewegung des Objekts schließen zu können. Um eine Feldstärke einer Funkverbindung eines mobilen Endgerätes und/oder mindestens eines weiteren in dem lokalen Funknetz angemeldeten Endgeräts zu einer Zugangseinheit des lokalen Funknetzes überwachen und auswerten zu können, ist es notwendig, um letztlich wirklich eine Funkverbindung identifizieren zu können, mindestens einen Referenzwert bereitzustellen, mit welchem gemessene Signalstärken, die mit einer jeweiligen Feldstärke gekoppelt sind, zu vergleichen sind. Gemäß der hier dargestellten Ausführungsform wird nun vorgeschlagen, mittels eines Filters, der bspw. als eine Art Schieberegister realisiert sein kann, fortlaufend Mittelwerte MW aus n zuletzt ermittelten Feldstärken zu bilden. Jeder derart gebildete Mittelwert MW wird mit einem bereitzustellenden Referenzwert RW verglichen. Im hier dargestellten Fall beträgt der Referenzwert RW 8,2. Der Vergleich wird hier derart durchgeführt, dass der Referenzwert RW von dem jeweiligen Mittelwert MW abgezogen wird und dabei ein Abweichewert ABW gebildet wird. Unterscheiden sich die Werte MW und RW über eine definierte Schwelle, wird eine Bewegung detektiert. Dazu verwendete Referenzwerte RW werden wie folgt ermittelt bzw. gebildet, was anhand von Figur 3 näher erklärt wird.

Fall 1. Auf Basis einer Kalibrierung des Systems, d. h. auf Basis eines bekannten Grundzustands, ohne dass mobile Endgeräte eingeschaltet sind, idealerweise ergänzt noch um eine Abwesenheit jeder einer Wohnung oder einem Haus zuzurechnenden Person.

Fall 2. Auf Basis eines Mittelwertes der letzten empfangenen Feldstärken einer bestehenden Funkverbindung einer Anzahl "X". Die Anzahl "X" sollte dabei viel größer sein als die voranstehend erwähnte Anzahl "n" von zuletzt ermittelten Feldstärken, um Ereignisse zuverlässig zu erkennen. Hierfür kann ein anderes viel größeres Filter verwendet werden, mit der Anzahl X oder aber es wird der Mittelwert von dem bereits ermittelten Mittelwert mit einem Filter über die Anzahl X gebildet.

Die in Figur 2 gezeigte Tabelle zeigt in Spalte S1 in den Zeilen Z2 bis Z12 verschiedene Zeitpunkte t1 bis t11, zu welchen ein Mittelwert MW aus jeweils n (n = 3) der zuvor ermittelten Feldstärken (Werte 1 bis 3) gebildet wird und dieser mit einem Referenzwert RW verglichen wird, wobei ein Abweichewert ABW berechnet wird. Der Wert 1 kann dabei der älteste gemessene und von der Auswerteinheit zur Auswertung verwendbare Wert sein und die Werte 2 und 3 können die zeitlich unmittelbar zeitlich danachliegenden Werte sein. Beispielhaft sind in der Figur 2 die zwölf auf den Wert 1 zeitlich nachfolgenden Werte aufgelistet worden, um die Detektion eines Ereignisses zu verdeutlichen. Hierbei ist ein Wert der Größe "9" einer höheren Feldstärke als z. B. ein Wert der Größe "8" zuzurechnen. In Spalte S2 wird der jeweilige Mittelwert MW angezeigt. In Spalte S3 wird die anhand des Mittelwerts MW und des Referenzwerts RW gebildete Differenz als Abweichewert ABW angegeben. In Spalte S4 werden idealisierte Werte einer ermittelten Stärke einer bestehenden Funkverbindung, d. h. einer Feldstärke, die über eine Zeit t üblicherweise in dB bzw. dBm gemessen wurden, angegeben. Zu einem Zeitpunkt t1 werden (bei n=3) die im zeitlichen Kontext ermittelten Werte Wert 1, Wert 2 und Wert 3, die in Spalte S5 angegeben sind, einem Filter, der wie oben genannt als Schieberegister ausgebildet sein kann, zugeführt. Über diese drei Werte, die dem Filter zugeführt werden, wird ein Mittelwert MW gebildet, wobei zunächst in Spalte S6 die Summe aus diesen drei Werten gebildet wird und dadurch eine Division durch n, hier n = 3, der Mittelwert MW in Spalte S2 berechnet wird. Anhand des Mittelwerts MW und dem hinterlegten Referenzwert RW wird dann der in Spalte S3 angegebene Abweichewert ABW ermittelt. Zu einem darauffolgenden Zeitpunkt t2 werden dann die Werte, die zum Zeitpunkt t1 als Werte Wert 2, Wert 3 und Wert 4 gelistet waren, nun als neue Werte Wert 1, Wert 2, Wert 3 in Spalte S5 dem Filter zugeführt und entsprechend, wie anhand von den Werten Wert 1, Wert 2 und Wert 3 zum Zeitpunkt t1 erläutert, behandelt. Diese Vorgehensweise wird fortlaufend entsprechend bei allen gemessenen Werten angewandt. Weicht der jeweils ermittelte Abweichewert ABW von einem vorgegebenen Schwellwert, wie bspw. SW = 3 (3dB) ab, so wird ein Ereignis detektiert, wie im vorliegenden Fall in den Zeilen Z7 und Z8, d. h. zu den Zeitpunkten t6 und t7 gegeben. Um Vorgenanntes anhand von konkreten Zeiten beispielhaft zu verdeutlichen, kann der zeitliche Abstand von der Ermittlung des Wertes Y bis zum nächsten Wert Y+1 10ms betragen, für 13 Werte ergibt dies somit ein "Aufzeichnungsfenster" S4+S5 von 130 ms. Bei n=3 beträgt das Auswertefenster S5, das Teil des Aufzeichnungsfensters ist, 3 Werte bzw. 30 ms, daraus wird bei t1 der Mittelwert MW errechnet und in Verbindung mit dem Referenzwert RW der Abweichwert ABW ermittelt. 10ms später ergibt sich ein neuer Wert 1, der dem Wert 2 von vor 10ms entspricht, jetzt wird bei t2 wieder neu der Mittelwert MW errechnet und in Verbindung mit dem Referenzwert RW der Abweichwert ABW ermittelt und so weiter. Für das Verfahren ist es unerheblich, ob der Wert 1 der älteste zur Berechnung des Mittelwertes MW herangezogene Messwert ist oder der aktuellste und danach dann noch 12 weitere Werte abgewartet werden müssen, um das Aufzeichnungsfenster S4+S5 mit Werten zu füllen. Es ist lediglich bei der Ermittlung des Referenzwertes darauf zu achten, dass hierfür ausreichend Werte (gemäß Figur 3 mindestens 13) erfasst wurden, um den Referenzwert RW zu bestimmen.

In Abhängigkeit einer Güte des Systems, d. h. einer Anzahl von auswertbaren Funkverbindungen und einer Anzahl von Accesspoints, die an unterschiedlichen Stellen eine bestehende Funkverbindung hinsichtlich einer bestehenden Feldstärke und ihrer zeitlichen Änderung überwachen, können auch unterschiedliche Schwellwerte SW zu unterschiedlichen Detektionen von Ereignissen herangezogen werden, bspw. zur Detektion eines am Boden laufenden Hundes gegenüber einer Detektion einer sich bewegenden Person. So kann bspw. ein Schwellwert SW1 für einen Hund und ein Schwellwert SW2 für einen Mensch hinterlegt werden, wobei dabei in der Regel aufgrund der größeren Masse und Höhe SW2 > SW1 zu wählen ist. Auf Basis der Ereignisse der hierzu gemessenen Feldstärken können dreidimensionale Karten erstellt werden, die eine ungefähre Lage des detektierten Ereignisses, bspw. innerhalb eines Raumes, angeben können. Hierzu ist es jedoch zwingend erforderlich, dass die Zugangseinheit, wie bspw. der WLAN Router im Falle eines WLANs und die ihm zugeordneten Accesspoints mit ihrer jeweiligen genauen Position dem erfindungsgemäßen Verfahrens bekannt gemacht worden sind. Zudem ist es hilfreich, über eine Lernsequenz definierte Störungen, wie bspw. die eines Tieres oder die eines Menschen an einer definierten Position anzulernen.

Figur 3 zeigt eine Tabelle mit vier Spalten S1'... S4' und zwölf Zeilen Z1'...Z12'. In der Tabelle soll aufgezeigt werden, wie eine erfindungsgemäß zu überwachende Feldstärke mindestens einer Funkverbindung zur Ermittlung des Referenzwertes verwendet wird. Die mindestens eine Funkverbindung kann dabei im einfachsten Fall auch durch Aussenden und Empfangen von Signalen durch die Zugangseinheit allein realisiert sein. Die zu einer Zeit t (S1') zuletzt ermittelten Werte (S3') der Anzahl X (hier: X = 13) werden aufsummiert (S4') und durch die Anzahl X zur Ermittlung eines Mittelwertes geteilt. Das Ergebnis ergibt einen Referenzwert RW (S2'). Charakteristisch für den Referenzwert RW ist, dass sich dieser zeitlich von seinen Vorgänger- und Nachfolgerwerten nicht signifikant unterscheidet. Je größer die Anzahl X im Vergleich zur Anzahl n bei der Ermittlung des Mittelwertes MW ist (siehe Figur 2), umso signifikanter wird die Abweichung sein, wenn ein Ereignis (Bewegung) detektiert wird.

Der Referenzwert RW kann grundsätzlich aus einem oder mehreren in zeitlicher Folge ermittelten Referenzwerten RW gebildet werden, dies kommt insbesondere bei Fall 1 zur Kalibrierung des Systems zur Anwendung. Bei Fall 2 werden die Referenzwerte RW fortlaufend gebildet.

Wie voranstehend bereits erwähnt, wird das Ergebnis der Differenz zwischen Mittelwert MW und Referenzwert RW, welches einen Abweichewert ABW ergibt, fortlaufend überwacht und sobald der Abweichewert ABW einen Schwellwert übersteigt, wird ein Ereignis, d. h. eine Bewegung detektiert. Dabei kann der Schwellwert einmalig oder, wie in der Tabelle aus Figur 2 schraffiert gekennzeichnet, z. B. zweimalig überstiegen werden.

Für das erfindungsgemäße Verfahren ist die Errechnung des Mittelwertes nicht nur als arithmetischer Mittelwert, sondern auch als geometrischer, harmonischer oder quadratischer Mittelwert oder gemäß einer weiteren hier nicht aufgeführten Form zur Berechnung des Mittelwertes denkbar, z. B. auch als gleitende Durchschnitte. Andere mathematische Verfahren, die eine Anzahl von Messwerten zu einem Wert XY (bzw. MW) zusammenfassen, der dann in ein Verhältnis zu einem Referenzwert gebracht und hinsichtlich der Überschreitung eines vorgegebenen Schwellwertes zur Detektion eines Ereignisses verwandt wird, sind ebenfalls denkbar.

## Patentansprüche

1. Verfahren zum Detektieren einer Bewegung mindestens eines Objekts (20) in einem lokalen Funknetz (10), bei dem zeitliche Änderungen einer Feldstärke mindestens eines einer Zugangseinheit (11) des lokalen Funknetzes (10) zuzuordnenden Funkfeldes überwacht, aufgenommen, analysiert und ausgewertet werden, wobei gezielt mindestens ein passives Bauelement (13) im Bereich des lokalen Funknetzes (10) derart installiert wird, dass die Feldstärke des mindestens einen Funkfeldes (10) bei einer Bewegung des Objekts (20) vor das mindestens eine Bauelement (13) messbar beeinflusst wird, worüber die Bewegung des Objekts (20) detektiert wird.

2. Verfahren nach Anspruch 1, bei dem als passives Bauelement (13) ein Dipol, der auf eine Frequenz des lokalen Funknetzes angepasst ist, gewählt wird.

3. Verfahren nach einem der voranstehenden Ansprüche, bei dem zeitliche Änderungen einer Feldstärke einer Funkverbindung von mindestens einem in dem lokalen Funknetz (10) angemeldeten Endgerät zu der mindestens einen Zugangseinheit des lokalen Funknetzes (10) überwacht, aufgenommen, analysiert und ausgewertet werden.

4. Verfahren nach einem der voranstehenden Ansprüche, bei dem bei der Aufnahme der zeitlichen Änderungen der Feldstärke vor der Auswertung derselben externe Umfeldeinflüsse, insbesondere Störquellen in Form mindestens eines Funkwellen aussendenden Geräts und/oder mindestens eines anderen Funknetzes rausgerechnet werden.

5. Verfahren nach einem der voranstehenden Ansprüche, bei dem als lokales Funknetz (10) ein Heimnetz, insbesondere ein WLAN verwendet wird.

6. Verfahren nach einem der voranstehenden Ansprüche, bei dem die mindestens eine Zugangseinheit (11) durch einen WLAN-Router realisiert wird.

7. Verfahren nach einem der Ansprüche 3 bis 6, bei dem das mindestens eine in dem lokalen Funknetz (10) angemeldete Endgerät ein mobiles und/oder ein stationäres Endgerät ist und im Falle, dass das lokale Funknetz (10) ein WLAN ist, dabei insbesondere ausgewählt wird aus der Gruppe bestehend aus: WLAN-Radio, WLAN-Receiver, ein mit einem WLAN-Modul ausgestattetes Gerät.

8. Verfahren nach einem der voranstehenden Ansprüche, bei dem aus den zeitlichen Änderungen der Feldstärke ein Feldstärkenmuster des Funkfeldes abgeleitet und in einer Speichereinheit abrufbar hinterlegt wird.

9. Verfahren nach Anspruch 8, bei dem zeitliche Änderungen der Feldstärke für definierte, im Bereich des lokalen Funknetzes liegende Wege aufgenommen, in der Speichereinheit abgelegt und als Vergleichsgrundlage für zukünftige Standortbestimmungen des zu detektierenden Objekts (20) verwendet werden.

10. Verfahren nach einem der Ansprüche 8 oder 9, bei dem gleichzeitig jeweilige zeitlichen Änderungen einer Feldstärke eines jeweiligen Funkfeldes mehrerer Zugangseinheiten (11) des lokalen Funknetzes (10) bestimmt, analysiert und ausgewertet werden und aus einer Zusammenschau der daraus erstellten entsprechend mehreren Feldstärkenmuster der jeweiligen Funkfelder eine aktuelle Standortbestimmung des Objekts (20) vorgenommen wird.

11. Verfahren nach einem der Ansprüche 8 bis 10, bei dem mit Hilfe des abgeleiteten Feldstärkenmusters ein aktueller Standort des Objekts (20) auf einem hinterlegten Lageplan von dem lokalen Funknetz (10) zuzuordnenden Zugangseinheiten (11) angezeigt wird.

12. Verfahren nach einem der voranstehenden Ansprüche, bei dem im Falle, dass bei der Auswertung der Feldstärke festgestellt wird, dass sich das Objekt (20) im Bereich des lokalen Funknetzes (10) befindet, eine Warnnachricht, insbesondere in Form einer E-Mail an einen oder mehrere Nutzer ausgegeben wird.

13. System zum Detektieren einer Bewegung mindestens eines Objekts (20) in einem lokalen Funknetz (10), mit einer Aufnahmeeinheit, die dazu konfiguriert ist, zeitliche Änderungen einer Feldstärke eines mindestens einer Zugangseinheit (11) des lokalen Funknetzes (10) zuzuordnenden Funkfeldes aufzunehmen, einer Auswerteeinheit, die mit der Aufnahmeeinheit in kommunikativer Verbindung steht und dazu konfiguriert ist, die von der Aufnahmeeinheit ermittelten zeitlichen Änderungen der Feldstärke zu analysieren und auszuwerten, und mindestens einem passiven Bauelement (13), das dazu konfiguriert ist, bei gezielter Installation im Bereich des lokalen Funknetzes (10) die Feldstärke des Funkfeldes messbar zu beeinflussen, wobei das mindestens eine Bauelement (13) im Bereich des Funkfeldes derart zu installieren ist, dass die Feldstärke des Funkfeldes bei einer Bewegung des Objekts (20) vor das mindestens eine Bauelement (13) signifikant beeinflusst wird.

14. System nach Anspruch 13, das eine Speichereinheit umfasst, die dazu ausgelegt ist, ein aus den zeitlichen Änderungen der Feldstärke abgeleitetes Feldstärkenmuster und/oder ein davon abgeleitetes Bewegungsmuster des Objekts (20) abrufbar zu speichern.

15. System nach einem der Ansprüche 13 oder 14, das ferner eine Anzeigeeinheit aufweist, die dazu konfiguriert ist, das abgeleitete Bewegungsmuster anzuzeigen bzw. visualisiert darzustellen.

16. System nach einem der Ansprüche 13 bis 15, bei dem das passive Bauelement dazu konfiguriert ist, regelmäßig einen vordefinierten Code auszusenden, so dass im Falle eines Nichtempfangs des Codes durch die Aufnahmeeinheit darauf zu schließen bzw. schließbar ist, dass sich ein Objekt vor das Bauelement bewegt hat.

17. Computerprogrammprodukt mit einem computerlesbaren Medium und einem auf dem computerlesbaren Medium gespeicherten Computerprogramm mit Programmcodemitteln, die dazu konfiguriert sind, bei Ablauf des Computerprogramms auf einer Recheneinheit, ein Verfahren nach einem der Ansprüche 1 bis 12 auszuführen.

Figur 1

| | S1 | S2 | S3 | S4_1 | S4_2 | S4_3 | S4_4 | S4_5 | S4_6 | S4_7 | S4_8 | S4_9 | S4_10 | S5_1 | S5_2 | S5_3 | S6 |
|---|---|---|---|---|---|---|---|---|---|---|---|---|---|---|---|---|---|
| Z1 | t | MW | ABW | Wert 13 | Wert 12 | Wert 11 | Wert 10 | Wert 9 | Wert 8 | Wert 7 | Wert 6 | Wert 5 | Wert 4 | Wert 3 | Wert 2 | Wert 1 | Σ Wert 1 - 3 |
| Z2 | t1 | 7,33 | -0,87 | 8 | 7 | 9 | 9 | 5 | 4 | 3 | 6 | 8 | 9 | 8 | 7 | 7 | 22 |
| Z3 | t2 | 8,00 | -0,20 | | 8 | 7 | 9 | 9 | 5 | 4 | 3 | 6 | 8 | 9 | 8 | 7 | 24 |
| Z4 | t3 | 8,33 | 0,13 | | | 8 | 7 | 9 | 9 | 5 | 4 | 3 | 6 | 8 | 9 | 8 | 25 |
| Z5 | t4 | 7,67 | -0,53 | | | | 8 | 7 | 9 | 9 | 5 | 4 | 3 | 6 | 8 | 9 | 23 |
| Z6 | t5 | 5,67 | -2,53 | | | | | 8 | 7 | 9 | 9 | 5 | 4 | 3 | 6 | 8 | 17 |
| Z7 | t6 | 4,33 | -3,87 | | | | | | 8 | 7 | 9 | 9 | 5 | 4 | 3 | 6 | 13 |
| Z8 | t7 | 4,00 | -4,20 | | | | | | | 8 | 7 | 9 | 9 | 5 | 4 | 3 | 12 |
| Z9 | t8 | 6,00 | -2,20 | | | | | | | | 8 | 7 | 9 | 9 | 5 | 4 | 18 |
| Z10 | t9 | 7,67 | -0,53 | | | | | | | | | 8 | 7 | 9 | 9 | 5 | 23 |
| Z11 | t10 | 8,33 | 0,13 | | | | | | | | | | 8 | 7 | 9 | 9 | 25 |
| Z12 | t11 | 8,00 | 0,20 | | | | | | | | | | | 8 | 7 | 9 | 24 |

Figur 2

|  | S1′ | S2′ | | | | | | | | | | | | | | | S4′ |
| | | | S3′_1 | S3′_2 | S3′_3 | S3′_4 | S3′_5 | S3′_6 | S3′_7 | S3′_8 | S3′_9 | S3′_10 | S3′_11 | S3′_12 | S3′_13 | |
| Z1′ | t | RW | Wert 13 | Wert 12 | Wert 11 | Wert 10 | Wert 9 | Wert 8 | Wert 7 | Wert 6 | Wert 5 | Wert 4 | Wert 3 | Wert 2 | Wert 1 | Σ Wert 1 - 13 |
| Z2′ | t1 | 8,08 | 8 | 7 | 9 | 9 | 8 | 7 | 8 | 9 | 8 | 9 | 8 | 7 | 8 | 105 |
| Z3′ | t2 | 8,00 | 7 | 8 | 7 | 9 | 9 | 8 | 7 | 8 | 9 | 8 | 9 | 8 | 7 | 104 |
| Z4′ | t3 | 8,08 | 8 | 7 | 8 | 7 | 9 | 9 | 8 | 7 | 8 | 9 | 8 | 9 | 8 | 105 |
| Z5′ | t4 | 8,15 | 9 | 8 | 7 | 8 | 7 | 9 | 9 | 8 | 7 | 8 | 9 | 8 | 9 | 106 |
| Z6′ | t5 | 8,08 | 8 | 9 | 8 | 7 | 8 | 7 | 9 | 9 | 8 | 7 | 8 | 9 | 8 | 105 |
| Z7′ | t6 | 8,08 | 8 | 8 | 9 | 8 | 7 | 8 | 7 | 9 | 9 | 8 | 7 | 8 | 9 | 105 |
| Z8′ | t7 | 8,08 | 9 | 8 | 8 | 9 | 8 | 7 | 8 | 7 | 9 | 9 | 8 | 7 | 8 | 105 |
| Z9′ | t8 | 8,08 | 8 | 9 | 8 | 8 | 9 | 8 | 7 | 8 | 7 | 9 | 9 | 8 | 7 | 105 |
| Z10′ | t9 | 8,08 | 7 | 8 | 9 | 8 | 8 | 9 | 8 | 7 | 8 | 7 | 9 | 9 | 8 | 105 |
| Z11′ | t10 | 8,08 | 8 | 7 | 8 | 9 | 8 | 8 | 9 | 8 | 7 | 8 | 7 | 9 | 9 | 105 |
| Z12′ | t11 | 8,00 | 8 | 8 | 7 | 8 | 9 | 8 | 8 | 9 | 8 | 7 | 8 | 7 | 9 | 104 |

S3′

Figur 3

Europäisches Patentamt
European Patent Office
Office européen des brevets

**EUROPÄISCHER RECHERCHENBERICHT**

Nummer der Anmeldung

EP 16 02 0481

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GUO YI ET AL: "RollCaller: User-friendly indoor navigation system using human-item spatial relation", IEEE INFOCOM 2014 - IEEE CONFERENCE ON COMPUTER COMMUNICATIONS, IEEE, 27. April 2014 (2014-04-27), Seiten 2840-2848, XP032613411, DOI: 10.1109/INFOCOM.2014.6848234 [gefunden am 2014-07-02] * das ganze Dokument * ----- | 1-17 | INV. G01S5/02 G01S13/56 G08B13/24 |
| X | HAN DING ET AL: "Device-Free Mobile Target Tracking Using Passive Tags", INTERNATIONAL JOURNAL OF DISTRIBUTED SENSOR NETWORKS, Bd. 11, Nr. 11, 1. November 2015 (2015-11-01), Seiten 1-12, XP055368148, ISSN: 1550-1477, DOI: 10.1155/2015/870204 * das ganze Dokument * ----- | 1-17 | |
| A | HAN DING ET AL: "Human object estimation via backscattered radio frequency signal", 2015 IEEE CONFERENCE ON COMPUTER COMMUNICATIONS (INFOCOM), 1. April 2015 (2015-04-01), Seiten 1652-1660, XP055368200, DOI: 10.1109/INFOCOM.2015.7218545 ISBN: 978-1-4799-8381-0 * Seite 1652, Absatz I - Seite 1653 * * Zusammenfassung * ----- | 1-17 | RECHERCHIERTE SACHGEBIETE (IPC) G01S G08B |
| A | WO 2015/168700 A1 (UNIV LELAND STANFORD JUNIOR [US]) 5. November 2015 (2015-11-05) * Seite 5, Absatz 27 - Seite 9, Absatz 37 * * Abbildungen 1-4 * * Zusammenfassung * ----- | 1-17 | |

Der vorliegende Recherchenbericht wurde für alle Patentansprüche erstellt

| Recherchenort | Abschlußdatum der Recherche | Prüfer |
|---|---|---|
| München | 2. Mai 2017 | von Walter, Sven-Uwe |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 02 0481

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-05-2017

| Im Recherchenbericht angeführtes Patentdokument | Datum der Veröffentlichung | Mitglied(er) der Patentfamilie | Datum der Veröffentlichung |
|---|---|---|---|
| WO 2015168700 A1 | 05-11-2015 | US 2017090026 A1<br>WO 2015168700 A1 | 30-03-2017<br>05-11-2015 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014067586 A
- DE 102015121227